# EUROPÄISCHE PATENTSCHRIFT

(11) **EP 3 813 314 B1**
(45) Veröffentlichungstag und Bekanntmachung des Hinweises auf die Patenterteilung: **27.04.2022**
(21) Anmeldenummer: 19204902.1
(22) Anmeldetag: 23.10.2019
(51) Int. Cl.: H04L 29/06, H04L 12/24

(54) **SICHERUNGSSYSTEM UND VERFAHREN ZUR FILTERUNG EINES DATENVERKEHRS**
SECURING SYSTEM AND METHOD FOR FILTERING DATA TRAFFIC
SYSTÈME DE SÉCURISATION ET PROCÉDÉ DE FILTRATION D'UN TRAFIC DES DONNÉES

(43) Veröffentlichungstag der Anmeldung: 28.04.2021
(73) Patentinhaber: Siemens Aktiengesellschaft, 80333 München (DE)
(72) Erfinder: Falk, Rainer, 85586 Poing (DE); Otto, Christina, 81739 Muenchen (DE); Patzlaff, Heiko, 80799 München (DE); Wimmer, Martin, 85579 Neubiberg (DE)

(56) Entgegenhaltungen:
- WO-A1-2018/162176
- DE-A1-102005 051 090
- US-A1- 2008 141 332

## Beschreibung

Die Erfindung betrifft ein Sicherungssystem und ein computerimplementiertes Verfahren zur Filterung eines Datenverkehrs zwischen einem ersten Netzwerk und einem zweiten Netzwerk. Weiter ist die Erfindung auf ein Computerprogrammprodukt zur Ausführung des computerimplementierten Verfahrens gerichtet. Angriffe oder Attacken auf ein IT-System oder ein ITbasiertes Automatisierungssystem, d.h. unerlaubte Zugriffe zum Schaden eines solchen Systems, können mittels einer Firewall oder eines Security Gateways vermieden werden. Firewalls filtern gemäß einem konfigurierten Regelwerk (engl. Policy) den Datenverkehr. Außerdem können Angriffe mittels geeigneter Vorrichtungen bzw. Software detektiert werden, wie z.B. mittels eines (Network) Intrusion Detection Systems (kurz: (N)IDS). Firewalls können bei einem Angriff umkonfiguriert werden, um zulässigen Datenverkehr einzuschränken und um damit den Angriff abzuwehren. Dabei besteht allerdings die Gefahr, dass ein Angreifer oder ein nicht hinreichend geschulter Anwender diese Einschränkung unzulässigerweise zurücknimmt oder ändert.

WO 2018/162176 A1 zeigt eine Gateway-Vorrichtung zur Steuerung einer Datenübertragung zwischen Fahrzeugnetzwerken in Abhängigkeit eines Fahrzeugzustandes. DE 10 2005 051090 A1 betrifft das Ändern eines Paketfilters mittels einer Filterkonfigurationseinheit bei Änderung von Netzzuständen.

Es ist daher die Aufgabe der Erfindung, einen Netzwerkverkehr verlässlich zu beschränken, um eine unkontrollierte Umschaltung zurück auf ein ursprünglich konfiguriertes Regelwerk zu erschweren.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt.

Gemäß einem ersten Aspekt betrifft die Erfindung ein Sicherungssystem zur Filterung eines Datenverkehrs zwischen einem ersten Netzwerk und einem zweiten Netzwerk gemäß einem Regelwerk, wobei das Sicherungssystem zwischen dem ersten und dem zweiten Netzwerk angeordnet ist, aufweisend:
a) ein Verwaltungsmodul, das derart eingerichtet ist,
   - in Abhängigkeit eines Steuerungsbefehls ein zusätzliches Regelwerk für das Sicherungssystem zur Filterung des Datenverkehrs zu aktivieren
      und
   - durch einen Sperrbefehl und/oder bei der Aktivierung des zusätzlichen Regelwerks ein Zurücksetzen auf ein ursprünglich aktiviertes Regelwerk des Sicherungssystems und eine Modifikation des zusätzlichen Regelwerks zu unterbinden,
b) ein Filtermodul, das derart eingerichtet ist, bei aktiviertem zusätzlichen Regelwerk den Datenverkehr zwischen dem ersten Netzwerk und dem zweiten Netzwerk nach dem ursprünglich aktivierten Regelwerk und dem zusätzlichen Regelwerk oder lediglich nach dem zusätzlichen Regelwerk zu filtern und den entsprechend gefilterten Datenverkehr zuzulassen.

Ein zweiter Aspekt der Erfindung betrifft ein computerimplementiertes Verfahren zur Filterung eines Datenverkehrs zwischen einem ersten Netzwerk und einem zweiten Netzwerk gemäß einem Regelwerk durch ein zwischen dem ersten Netzwerk und dem zweiten Netzwerk angeordnetes Sicherungssystem, umfassend die Verfahrensschritte:
- Aktivieren eines zusätzlichen Regelwerks für das Sicherungssystem zur Filterung des Datenverkehrs in Abhängigkeit eines Steuerungsbefehls,
- Unterbinden eines Zurücksetzens auf ein ursprünglich aktiviertes Regelwerk des Sicherungssystems und einer Modifikation des zusätzlichen Regelwerks durch einen Sperrbefehl und/oder bei der Aktivierung des zusätzlichen Regelwerks,
- Filtern des Datenverkehrs zwischen dem ersten Netzwerk und dem zweiten Netzwerk bei aktiviertem zusätzlichen Regelwerk nach dem ursprünglich aktivierten Regelwerk und dem zusätzlichen Regelwerk oder lediglich nach dem zusätzlichen Regelwerk,
   und
- Zulassen des entsprechend gefilterten Datenverkehrs.

Es ist ein Vorteil der vorliegenden Erfindung, dass ein derart konfigurierbares Sicherungssystem einen Datenverkehr verlässlich einschränkt. Die Filterung erfolgt insbesondere gemäß mindestens einem konfigurierbaren Regelwerk. Beispielsweise kann bei einem erkannten Angriff, z.B. durch Malware, auf ein Netzwerk das zusätzliche Regelwerk aktiviert und das Sicherungssystem so konfiguriert werden, dass es den Datenverkehr nach dem zusätzlichen Regelwerk und dem ursprünglichen Regelwerk filtert. Somit kann der Datenverkehr sowohl gemäß dem ursprünglichen Regelwerk wie auch nach dem zusätzlichen Regelwerk als zulässig gelten, um von dem Sicherungssystem weitergeleitet zu werden. Ein Angreifer, z.B. ein Hacker, oder ein Anwender kann das bei einem Angriff aktivierte zusätzliche Regelwerk nicht auf einfach Weise ändern oder das Sicherungssystem unzulässig auf das ursprüngliche Regelwerk zurücksetzen.

Das Sicherungssystem kann insbesondere Software und/oder Hardware umfassen. Das Sicherungssystem hat insbesondere ein ursprüngliches Regelwerk vorkonfiguriert, nach dem das Sicherungssystem, insbesondere bei einem Regelbetrieb, einen Datenverkehr zwischen einem ersten und einem zweiten Netzwerk filtert. In Abhängigkeit eines Steuerungsbefehls wird ein zusätzliches Regelwerk konfiguriert, so dass das Filtermodul den Datenverkehr nach dem ursprünglichen und dem zusätzlichen Regelwerk oder lediglich nach dem zusätzlichen Regelwerk filtert. So kann zum einen, wenn das zusätzliche Regelwerk aktiviert ist, nach beiden Regelwerken gefiltert werden, d.h. es wird eine logische UND-Verknüpfung durchgesetzt. Ein Datenverkehr ist in diesem Fall nur zulässig, wenn er die Bedingungen beider Regelwerke erfüllt. Zum anderen kann entweder nach dem ursprünglichen oder, bei Aktivierung des zusätzlichen Regelwerks, nach dem zusätzlichen Regelwerk gefiltert werden.

In einer Ausführungsform des Sicherungssystems kann das zusätzliche Regelwerk derart eingerichtet sein, den Datenverkehr auf Basis von Filterkriterien, die sich von den Filterkriterien des ursprünglich aktivierten Regelwerks zumindest teilweise unterscheiden, zu filtern.

Das ursprüngliche Regelwerk und/oder das zusätzliche Regelwerk können insbesondere derart eingerichtet sein, dass der Datenverkehr zwischen dem ersten und zweiten Netzwerk bidirektional zugelassen wird. Die Filterkriterien des ursprünglichen Regelwerks und des zusätzlichen Regelwerks können sich insbesondere ergänzen oder teilweise überlappen. So kann der Datenverkehr beispielsweise mittels des zusätzlichen Regelwerks weiter eingeschränkt werden. Alternativ können die Filterkriterien des zusätzlichen Regelwerks den Datenverkehr weniger einschränken und, bei Aktivierung des zusätzlichen Regelwerks, spezifizierten Datenverkehr zulassen.

In einer Ausführungsform des Sicherungssystems kann das zusätzliche Regelwerk derart eingerichtet sein, den durch das ursprünglich aktivierte Regelwerk gefilterten Datenverkehr restriktiver zu filtern.

Insbesondere können die Filterkriterien des zusätzlichen Regelwerks derart die Filterkriterien des ursprünglichen Regelwerks umfassen und beispielsweise weitere Filterkriterien aufweisen. So kann eine restriktivere Filterung des Datenverkehrs umgesetzt werden.

In einer Ausführungsform des Sicherungssystems kann das zusätzliche Regelwerk derart eingerichtet sein, den Datenverkehr unidirektional zuzulassen.

Damit kann eine Datenübertragung in nur eine Richtung, d.h. vom ersten Netzwerk in das zweite Netzwerk beziehungsweise vom zweiten Netzwerk in das erste Netzwerk, umgesetzt werden. Die Umsetzung kann insbesondere Hardware-basiert/unterstützt sein.

In einer Ausführungsform des Sicherungssystems kann das Verwaltungsmodul eingerichtet sein, das zusätzliche Regelwerk zu deaktivieren und das Sicherungssystem auf das ursprünglich aktivierte Regelwerk zurückzusetzen, wenn mindestens eine der folgenden Bedingungen erfüllt ist:
- Empfangen eines Deaktivierungsbefehls für das zusätzliche Regelwerk,
- Deaktivierung und/oder Reaktivierung des Sicherungssystems, und/oder
- Unterbrechung mindestens einer Kommunikationsverbindung des Sicherungssystems zum ersten und/oder zweiten Netzwerk.

Damit wird erreicht, dass ein Zurücksetzen auf das ursprünglich aktivierte Regelwerk, wenn das zusätzliche Regelwerk beispielsweise auf Grund eines Angriffs aktiviert ist, nicht versehentlich oder unzulässig erfolgt. Durch ein Deaktivieren des zusätzlichen Regelwerks ist das Sicherungssystem wieder regulär nutzbar, d.h. die Filterung erfolgt nach dem ursprünglichen Regelwerk.

In einer Ausführungsform des Sicherungssystems kann das Sicherungssystem derart eingerichtet sein, den Steuerungsbefehl von einer empfangenen Warnmeldung einer Angriffserkennungsvorrichtung abzuleiten, wobei die Angriffserkennungsvorrichtung im ersten Netzwerk und/oder im zweiten Netzwerk außerhalb des ersten oder zweiten Netzwerks eingerichtet ist.

Eine Angriffserkennungsvorrichtung kann beispielsweise ein lokales Intrusion Detection System sein. Eine solche Angriffserkennungsvorrichtung kann beispielsweise in einem der beiden Netzwerke eingerichtet sein. Zusätzlich oder alternativ kann eine Angriffserkennungsvorrichtung zusammen mit einer Datenverkehrsanalysevorrichtung, z.B. ein Predictive-Maintenance-Service oder ein Netzüberwachungsservice, in der Cloud eingerichtet sein.

Auf Basis eines erkannten oder vermuteten Angriffs kann von der Angriffserkennungsvorrichtung eine Warnmeldung ausgegeben werden. Der Steuerungsbefehl zur Aktivierung des zusätzlichen Regelwerks kann von einer solchen Warnmeldung abgeleitet werden. Somit kann das zusätzliche Regelwerk in Abhängigkeit eines detektierten oder mutmaßlichen Angriffs eingerichtet werden.

In einer Ausführungsform kann das Sicherungssystem derart eingerichtet sein, den Steuerungsbefehl auszugeben, wenn nach einer vorgegebenen Zeitdauer eine Positivmeldung einer Angriffserkennungsvorrichtung ausbleibt.

Beispielsweise kann von einer Angriffserkennungsvorrichtung zu vorgegebenen Zeitschritten eine Positivmeldung über einen Netzwerkstatus an das Sicherungssystem übermittelt werden. Eine Positivmeldung kann beispielsweise Log-Daten umfassen, die einen fehlerfreien Netzwerkstatus belegen. Das zusätzliche Regelwerk kann beispielsweise aktiviert werden, sobald nach einer vorgegebenen Zeitdauer eine solche Positivmeldung ausbleibt.

Des Weiteren betrifft die Erfindung ein Computerprogrammprodukt, das direkt in einen programmierbaren Computer ladbar ist, umfassend Programmcodeteile, die bei der Ausführung des Programms durch einen Computer diesen veranlassen, die Schritte eines erfindungsgemäßen Verfahrens auszuführen.

Ein Computerprogrammprodukt kann beispielsweise auf einem Speichermedium, wie z.B. Speicherkarte, USB-Stick, CD-ROM, DVD, ein nichtflüchtiger/dauerhaftes Speichermedium (engl. Non-transitory storage Medium) oder auch in Form einer herunterladbaren Datei von einem Server in einem Netzwerk bereitgestellt oder geliefert werden.

Ausführungsbeispiele des erfindungsgemäßen Sicherungssystems und des erfindungsgemäßen Verfahrens sind in den Zeichnungen beispielhaft dargestellt und werden anhand der nachfolgenden Beschreibung näher erläutert. Es zeigen:
- Fig. 1: eine schematische Darstellung eines erfindungsgemäßen Sicherungssystems zur Filterung eines Datenverkehrs zwischen einem ersten Netzwerk und einem zweiten Netzwerk;
- Fig. 2: eine weitere schematische Darstellung eines erfindungsgemäßen Sicherungssystems zur Filterung eines Datenverkehrs zwischen einem ersten Netzwerk und einem zweiten Netzwerk;
- Fig. 3: eine weitere schematische Darstellung eines erfindungsgemäßen Sicherungssystems zur Filterung eines Datenverkehrs zwischen einem ersten Netzwerk und einem zweiten Netzwerk; und
- Fig. 4: ein Ablaufdiagramm eines erfindungsgemäßen Verfahrens zur Filterung eines Datenverkehrs zwischen einem ersten Netzwerk und einem zweiten Netzwerk.

Einander entsprechende Teile sind in allen Figuren mit den gleichen Bezugszeichen versehen.

Insbesondere zeigen die nachfolgenden Ausführungsbeispiele lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Auch sind insbesondere einem (einschlägigen) Fachmann in Kenntnis des/der Verfahrensanspruchs/Verfahrensansprüche alle im Stand der Technik üblichen Möglichkeiten zur Realisierung der Erfindung selbstverständlich bekannt, sodass es insbesondere einer eigenständigen Offenbarung in der Beschreibung nicht bedarf.

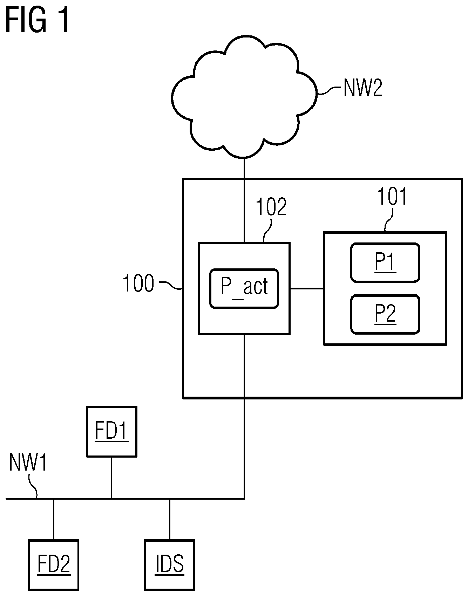

Figur 1 zeigt ein Ausführungsbeispiel eines erfindungsgemäßen Sicherungssystems 100, welches zwischen einem ersten Netzwerk NW1 und einem zweiten Netzwerk NW2 angeordnet ist, in Blockdarstellung. Das erste Netzwerk NW1 und das zweite Netzwerk NW2 sind über eine drahtlose oder drahtgebundene Kommunikationsverbindung miteinander verbunden, so dass Daten zwischen den Netzwerken ausgetauscht werden können.

Das erste Netzwerk NW1 kann beispielsweise ein Automatisierungsnetzwerk sein, welches mehrere Feldgeräte FD1, FD2 miteinander vernetzt. Die Feldgeräte können beispielsweise Steuergeräte oder IIoT-Geräte (engl. Industrial Internet of Things, kurz: IIoT) sein. Außerdem kann im ersten Netzwerk NW1 eine Angriffserkennungsvorrichtung IDS, wie beispielsweise ein Angriffserkennungstool (engl. Intrusion Detection System), integriert sein. Die Angriffserkennungsvorrichtung IDS ist vorzugsweise derart konfiguriert, Angriffe auf das erste Netzwerk NW1 zu erkennen und eine entsprechende Warnmeldung an das Sicherungssystem 100 auszugeben.

Das zweite Netzwerk NW2 ist beispielsweise ein offenes Netzwerk, wie z.B. ein Büronetzwerk, ein Mobilfunknetz oder das Internet. Das Sicherungssystem 100 ist derart eingerichtet, den Datenverkehr zwischen dem ersten Netzwerk NW1 und dem zweiten Netzwerk NW2 nach vorgegebenen Filterkriterien zu filtern und gegebenenfalls zu beschränken. Das Sicherungssystem 100 kann beispielsweise eine Firewall, ein IoT-Gateway oder eine Cross-Domain-Security-Lösung sein. Die vorgegebenen Filterkriterien sind in einem auf dem Sicherungssystem 100 konfigurierten Regelwerk P_act definiert. Ein Regelwerk kann auch als Policy bezeichnet werden.

Das Sicherungssystem 100 weist mindestens ein Verwaltungsmodul 101 und ein Filtermodul 102 auf. Des Weiteren kann das Sicherungssystem 100 mindestens einen Prozessor umfassen. Das Verwaltungsmodul 101 ist derart eingerichtet, in Abhängigkeit eines empfangenen Steuerungsbefehls ein zusätzliches Regelwerk P2 zum ursprünglich konfigurierten Regelwerk P1 zu aktivieren. Das Verwaltungsmodul 101 ist mit dem Filtermodul 102 gekoppelt. Das Verwaltungsmodul 101 verwaltet die entsprechend gespeicherten Regelwerke P1, P2, aktiviert diese abhängig von einem Steuerungsbefehl und konfiguriert das mindestens eine aktivierte Regelwerk auf dem Filtermodul 102. Insbesondere kann eine Vielzahl von zusätzlichen Regelwerken gespeichert sein und vom Verwaltungsmodul 101 verwaltet werden. Abhängig von einem Steuerungsbefehl kann insbesondere eines dieser zusätzlichen Regelwerke selektiert und aktiviert werden.

Das Filtermodul 102 ist derart konfiguriert, den Datenverkehr zwischen dem ersten Netzwerk NW1 und dem zweiten Netzwerk NW2 nach dem jeweilig aktivierten Regelwerk P_act oder den jeweils aktivierten Regelwerken zu filtern. Im regulären Betrieb des Sicherungssystems 100 ist das ursprüngliches Regelwerk P1 als aktiviertes Regelwerk P_act konfiguriert. Die Filterung erfolgt im regulären Betrieb nach dem ursprünglichen aktivierten Regelwerk P1.

Das Filtermodul 102 kann nach dem zusätzlichen Regelwerk P2, wenn dieses Regelwerk P2 aktiviert ist, und/oder dem ursprünglich aktivierten Regelwerk P1 filtern. Eine Aktivierung des zusätzlichen Regelwerks P2 erfolgt vorzugsweise in Abhängigkeit einer Warnmeldung der Angriffserkennungsvorrichtung IDS, sobald ein Angriff erkannt oder vermutet wird. Zusätzlich zur Aktivierung des zusätzlichen Regelwerks P2 wird durch einen expliziten Sperrbefehl und/oder bei der Aktivierung des zusätzlichen Regelwerks P2 ein Zurücksetzen auf das ursprünglich aktivierte Regelwerk P1 und eine Modifikation des zusätzlichen Regelwerks P2 unterbunden. In anderen Worten, durch die Aktivierung des zusätzlichen Regelwerks P2 wird verhindert, dass ein Angreifer oder ein Benutzer das aktivierte zusätzliche Regelwerk P2 ändert und/oder das Filtermodul 102 auf das ursprünglich aktivierte Regelwerk P1 zurücksetzt. So ist es bei der Aktivierung des zusätzlichen Regelwerks P2 über das Netzwerk oder eine reguläre Konfigurationsschnittstelle nicht mehr möglich, ein anderes Regelwerk zu aktivieren bzw. das zusätzliche Regelwerk P2 zu ändern.

Auf Basis der Warnmeldung kann der Steuerungsbefehl zur Aktivierung des zusätzlichen Regelwerks P2 abgeleitet werden. Die Filterung kann außerdem sowohl nach dem ursprünglich aktivierten Regelwerk P1 und dem zusätzlichen Regelwerk P2 oder lediglich nach dem zusätzlichen Regelwerk P2 erfolgen. Das Filtermodul 102 lässt lediglich den gefilterten Datenverkehr zu.

Die Filterkriterien des zusätzlichen Regelwerks P2 können derart definiert sein, dass sie sich zumindest teilweise von den Filterkriterien des ursprünglich aktivierten Regelwerks P1 unterscheiden.

Die Filterkriterien des zusätzlichen Regelwerks P2 sind vorzugsweise derart definiert, dass damit eine restriktivere Filterung des Datenverkehrs erzielt wird als mit dem ursprünglich aktivierten Regelwerk P1.

Alternativ können die Filterkriterien des zusätzlichen Regelwerks P2 auch derart definiert sein, dass, wenn insbesondere lediglich nach dem zusätzlichen Regelwerk P2 gefiltert wird, spezifizierter Datenverkehr zugelassen wird, der nach dem ursprünglichen Regelwerk P1 nicht zugelassen wird. So kann beispielsweise bei einer Fehlersituation ein zusätzlicher Wartungszugang freigeschaltet werden, welcher bei einer Filterung nach dem ursprünglichen Regelwerk P1 nicht zugelassen ist.

Das Zurücksetzen auf das ursprünglich aktivierte Regelwerk P1 kann durch einen geschützten Rücksetzvorgang erfolgen, wenn mindestens eine der folgenden Prüfbedingungen erfüllt sind:
- Empfangen eines Deaktivierungsbefehls zum Deaktivieren des zusätzlichen Regelwerks, wie z.B. ein lokaler Tastendruck oder Jumper am Sicherungssystem 100,
- Deaktivieren und/oder Reaktivieren des Sicherungssystems 100, wie z.B. durch einen Reboot oder durch Hochfahren des Sicherungssystems, so dass die Stromversorgung zum Sicherungssystem für ein vorgegebenen Zeitintervall unterbrochen ist,
   und/oder
- Unterbrechen von mindestens einer Kommunikationsverbindung des Sicherungssystems zum ersten und/oder zweiten Netzwerk, wie z.B. durch Entfernen eines Ethernet-Kabels.

Nach dem Rücksetzvorgang befindet sich das Sicherungssystem 100 wieder im regulären Betriebsmodus, d.h. der Datenverkehr wird nach dem ursprünglichen Regelwerk P1 gefiltert.

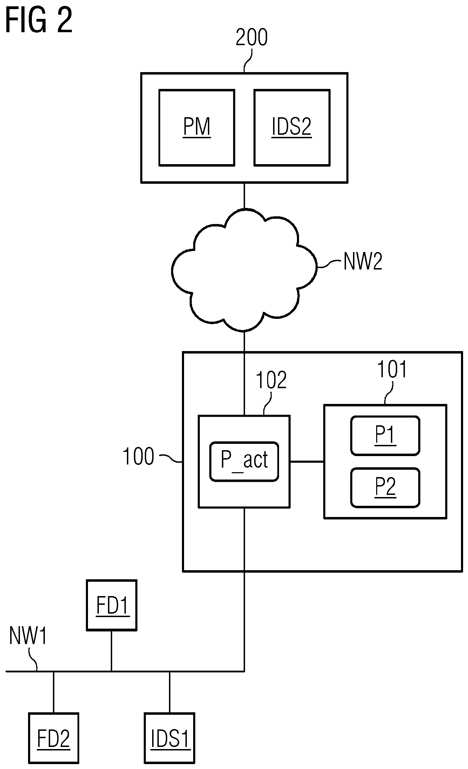

Figur 2 zeigt in Blockdarstellung ein weiteres Ausführungsbeispiel eines erfindungsgemäßen Sicherungssystem 100, welches ein Verwaltungsmodul 101 und ein Filtermodul 102 umfasst, das zwischen einem ersten Netzwerk NW1 und einem zweiten Netzwerk NW2 angeordnet ist. Im ersten Netzwerk NW1 sind beispielsweise Feldgeräte FD1, FD2 vernetzt. Außerdem weist das Netzwerk NW1 eine erste Angriffserkennungsvorrichtung IDS1 auf.

Das Sicherungssystem 100 ist außerdem mit einem System 200 über eine Kommunikationsverbindung verbunden, wobei das System 200 eine zweite Angriffserkennungsvorrichtung IDS2 und eine Datenverkehrsanalysevorrichtung PM umfasst. Beispielsweise ist das System 200 ein in einer Cloud realisierter IIoT-Backend-Service, der einen Predictive-Maintenance-Service und einen Intrusion-Detection-System-as-a-Service umfasst. Der Predictive-Maintenance-Service kann beispielsweise Gerätedaten der Feldgeräte FD1, FD2 aus dem ersten Netzwerk NW1 empfangen und auswerten. Beispielsweise kann eine statistische Auswertung durchgeführt werden, um eine Wahrscheinlichkeit eines anstehenden Defekts eines Feldgeräts zu ermitteln und vorab eine Wartung zu veranlassen. Mit der Angriffserkennungsvorrichtung System-as-a-Service kann eine Fernanalyse der Netzwerkdaten des ersten Netzwerks NW1 durchgeführt werden, um potenzielle Angriffe zu erkennen.

Das Sicherungssystem 100 filtert den Datenverkehr zwischen dem ersten Netzwerk NW1 und dem zweiten Netzwerk NW2 gemäß einer aktivierten Policy P_act. Wenn eine der beiden Angriffserkennungsvorrichtungen IDS1, IDS2 einen Angriff erkennt und eine entsprechende Warnmeldung an das Sicherungssystem 100 übermittelt, wird vom Verwaltungsmodul 101 eine zusätzliche Policy P2 aktiviert. Wird diese zusätzliche Policy P2 aktiviert und im Filtermodul 102 konfiguriert, wird anschließend der Datenverkehr zwischen dem ersten Netzwerk NW1 und dem zweiten Netzwerk NW2 nach dieser zusätzlichen Policy P2 und der ursprünglich aktivierten Policy P1 gefiltert. Alternativ kann das zusätzliche Regelwerk P2 auch aktiviert werden, wenn für eine vorgegebene Zeitdauer eine Positivmeldung einer der Angriffserkennungsvorrichtungen IDS1, IDS2 ausbleibt.

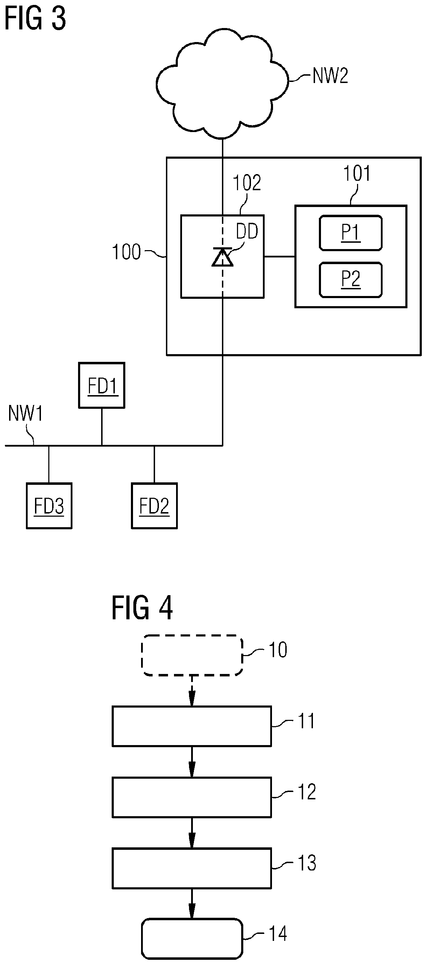

Figur 3 zeigt in Blockdarstellung ein weiteres Ausführungsbeispiel eines erfindungsgemäßen Sicherungssystems 100, welches den Datenverkehr zwischen einem sicherheitskritische Netzwerk NW1 und einem offenen Netzwerk NW2 filtert. Das Verwaltungsmodul 101 des Sicherungssystems 100 umfasst eine zusätzliche Policy P2, die als eine unidirektionale Policy ausgebildet ist. Diese unidirektionale Policy P2 bewirkt, dass eine Datenübertragung lediglich in einer Richtung möglich ist, z.B. lediglich vom sicherheitskritischen Netzwerk NW1 in das offene Netzwerk NW2. So können beispielsweise Status-und/oder Diagnosedaten der Feldgeräte FD1, FD2 aus dem sicherheitskritischen Netzwerk NW1 über ein unidirektionales Protokoll, z.B. UDP, übermittelt werden.

Die Durchsetzung der unidirektionalen Policy P2 kann Hardware-basiert oder Hardware-unterstützt erfolgen, so dass physikalisch gewährleistet wird, dass nur eine unidirektionale Datenübertragung möglich ist. Insbesondere kann bei Aktivierung der unidirektionalen Policy P2 lediglich nach dieser Policy gefiltert werden. Es ist jedoch auch möglich, dass der gemäß der unidirektionalen Policy P2 zulässige Datenverkehr zusätzlich noch nach der ursprünglichen Policy P1 gefiltert wird. In beiden Varianten ist, bei einem durch beispielsweise die Angriffserkennungsvorrichtung IDS detektierten Angriff, gewährleistet, dass vom offenen Netzwerk NW2 aus keine Beeinflussung des sicherheitskritischen Netzwerks NW1 und damit auch kein Angriff auf dessen Geräte FD1, FD2 möglich ist. Beispielsweise kann bei einem detektierten Angriff aus einer herkömmlichen bidirektionalen Firewall ein unidirektionales, Daten-filterndes One-Way-Gateway (Datendiode) konfiguriert werden.

Figur 4 zeigt ein erfindungsgemäßes computerimplementiertes Verfahren zur Filterung eines Datenverkehrs zwischen einem ersten Netzwerk und einem zweiten Netzwerk durch ein zwischen dem ersten Netzwerk und dem zweiten Netzwerk angeordneten Sicherungssystems.

Im ersten Schritt 10 des Verfahrens kann mittels einer Angriffserkennungsvorrichtung ein Angriff auf eines der beiden Netzwerke detektiert werden. Alternativ kann eine solche Angriffserkennungsvorrichtung zu vorgegebenen Zeitpunkten Positivmeldungen übermitteln. Sobald eine solche Positivmeldung nach einer vorgegebenen Zeitdauer ausbleibt, kann ebenfalls eine Warnmeldung ausgegeben werden. Die Warnmeldung kann an das Sicherungssystem übermittelt werden.

Im nächsten Schritt 11 wird abhängig von einem Steuerungsbefehl, der beispielsweise von der übermittelten Warnmeldung abgeleitet wird, ein zusätzliches Regelwerk für das Sicherungssystem aktiviert. Auf dem Sicherungssystem ist ein ursprünglich aktiviertes Regelwerk konfiguriert. Bei Aktivierung des zusätzlichen Regelwerks kann dieses im Filtermodul des Sicherungssystems konfiguriert werden.

Im nächsten Schritt 12 wird durch einen Sperrbefehl und/oder bei der Aktivierung des zusätzlichen Regelwerks, ein Zurücksetzen auf ein ursprünglich aktiviertes Regelwerk unterbunden. In anderen Worten, das auf dem Sicherungssystem ursprünglich aktivierte Regelwerk, nach dem im regulären Betrieb gefiltert wird, wird durch das zusätzliche Regelwerk ergänzt oder ersetzt. Vorzugsweise sind die Filterkriterien des zusätzlichen Regelwerks derart definiert, dass damit der Datenverkehr restriktiver als durch die Filterkriterien des ursprünglichen Regelwerks gefiltert wird.

Im nächsten Schritt 13 wird der Datenverkehr zwischen dem ersten Netzwerk und dem zweiten Netzwerk nach dem ursprünglich aktivierten Regelwerk und/oder nach dem zusätzlichen Regelwerk gefiltert, so dass Datenverkehr, der Filterkriterien gemäß dem ersten und/oder zweiten Regelwerk erfüllt, zugelassen wird.

Der gefilterte Datenverkehr wird vom Sicherungssystem zugelassen, Schritt 14.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Sicherungssystem (100) zur Filterung eines Datenverkehrs zwischen einem ersten Netzwerk (NW1) und einem zweiten Netzwerk (NW2) gemäß einem Regelwerk, wobei das Sicherungssystem (100) zwischen dem ersten und dem zweiten Netzwerk angeordnet ist, aufweisend:
a) ein Verwaltungsmodul (101), das derart eingerichtet ist,
- in Abhängigkeit eines Steuerungsbefehls ein zusätzliches Regelwerk (P2) für das Sicherungssystem zur Filterung des Datenverkehrs zu aktivieren und
- durch einen Sperrbefehl und/oder bei der Aktivierung des zusätzlichen Regelwerks ein Zurücksetzen auf ein ursprünglich aktiviertes Regelwerk (P1) des Sicherungssystems und eine Modifikation des zusätzlichen Regelwerks zu unterbinden,
b) ein Filtermodul (102), das derart eingerichtet ist, bei aktiviertem zusätzlichen Regelwerk (P2) den Datenverkehr zwischen dem ersten Netzwerk (NW1) und dem zweiten Netzwerk (NW2) nach dem ursprünglich aktivierten Regelwerk (P1) und dem zusätzlichen Regelwerk (P2) oder lediglich nach dem zusätzlichen Regelwerk (P2) zu filtern und den entsprechend gefilterten Datenverkehr zuzulassen.

2. Sicherungssystem (100) nach Anspruch 1, wobei das zusätzliche Regelwerk (P2) derart eingerichtet ist, den Datenverkehr auf Basis von Filterkriterien, die sich von den Filterkriterien des ursprünglich aktivierten Regelwerks zumindest teilweise unterscheiden, zu filtern.

3. Sicherungssystem (100) nach einem der vorhergehenden Ansprüche, wobei das zusätzliche Regelwerk (P2) derart eingerichtet ist, den durch das ursprünglich aktivierte Regelwerk gefilterten Datenverkehr restriktiver zu filtern.

4. Sicherungssystem (100) nach einem der vorhergehenden Ansprüche, wobei das zusätzliche Regelwerk (P2) derart eingerichtet ist, den Datenverkehr unidirektional zuzulassen.

5. Sicherungssystem (100) nach einem der vorhergehenden Ansprüche, wobei das Verwaltungsmodul (101) eingerichtet ist, das zusätzliche Regelwerk (P2) zu deaktivieren und das Sicherungssystem (100) auf das ursprünglich aktivierte Regelwerk (P1) zurückzusetzen, wenn mindestens eine der folgenden Bedingungen erfüllt ist:
- Empfangen eines Deaktivierungsbefehls für das zusätzliche Regelwerk,
- Deaktivierung und/oder Reaktivierung des Sicherungssystems (100),
und/oder
- Unterbrechung mindestens einer Kommunikationsverbindung des Sicherungssystems zum ersten und/oder zweiten Netzwerk.

6. Sicherungssystem (100) nach einem der vorhergehenden Ansprüche, wobei das Sicherungssystem (100) derart eingerichtet ist, den Steuerungsbefehl von einer empfangenen Warnmeldung einer Angriffserkennungsvorrichtung (IDS) abzuleiten, wobei die Angriffserkennungsvorrichtung im ersten Netzwerk oder im zweiten Netzwerk und/oder außerhalb des ersten oder zweiten Netzwerks eingerichtet ist.

7. Sicherungssystem nach einem der vorhergehenden Ansprüche, wobei das Sicherungssystem derart eingerichtet ist, den Steuerungsbefehl auszugeben, wenn nach einer vorgegebenen Zeitdauer eine Positivmeldung einer Angriffserkennungsvorrichtung (IDS) ausbleibt.

8. Computerimplementiertes Verfahren zur Filterung eines Datenverkehrs zwischen einem ersten Netzwerk (NW1) und einem zweiten Netzwerk (NW2) gemäß einem Regelwerk durch ein zwischen dem ersten Netzwerk und dem zweiten Netzwerk angeordnetes Sicherungssystem (100), umfassend die Verfahrensschritte:
- Aktivieren (11) eines zusätzlichen Regelwerks (P2) für das Sicherungssystem (100) zur Filterung des Datenverkehrs in Abhängigkeit eines Steuerungsbefehls,
- Unterbinden (12) eines Zurücksetzens auf ein ursprünglich aktiviertes Regelwerk (P1) des Sicherungssystems und einer Modifikation des zusätzlichen Regelwerks durch einen Sperrbefehl und/oder bei der Aktivierung des zusätzlichen Regelwerks,
- Filtern (13) des Datenverkehrs zwischen dem ersten Netzwerk und dem zweiten Netzwerk bei aktiviertem zusätzlichen Regelwerk (P2) nach dem ursprünglich aktivierten Regelwerk (P1) und dem zusätzlichen Regelwerk (P2) oder lediglich nach dem zusätzlichen Regelwerk (P2),
und
- Zulassen (14) des entsprechend gefilterten Datenverkehrs.

9. Computerprogrammprodukt umfassend Programmcodeteile, die bei der Ausführung des Programms durch einen Prozessor diesen veranlassen, die Schritte des Verfahrens nach Anspruch 8 auszuführen.

## Claims

1. Protection system (100) for filtering data traffic between a first network (NW1) and a second network (NW2) according to a policy, wherein the protection system (100) is arranged between the first and second networks, having:
a) a management module (101) which is configured - to activate an additional policy (P2) for the protection system for filtering the data traffic on the basis of a control command
and
- to prevent resetting to an originally activated policy (P1) of the protection system and modification of the additional policy by means of a disable command and/or upon activation of the additional policy,
b) a filter module (102) which is configured, when the additional policy (P2) is activated, to filter the data traffic between the first network (NW1) and the second network (NW2) according to the originally activated policy (P1) and the additional policy (P2) or only according to the additional policy (P2) and to admit the accordingly filtered data traffic.

2. Protection system (100) according to Claim 1, wherein the additional policy (P2) is configured to filter the data traffic on the basis of filter criteria which at least partially differ from the filter criteria of the originally activated policy.

3. Protection system (100) according to one of the preceding claims, wherein the additional policy (P2) is configured to filter the data traffic filtered by the originally activated policy in a more restrictive manner.

4. Protection system (100) according to one of the preceding claims, wherein the additional policy (P2) is configured to admit the data traffic in a unidirectional manner.

5. Protection system (100) according to one of the preceding claims, wherein the management module (101) is configured to deactivate the additional policy (P2) and to reset the protection system (100) to the originally activated policy (P1) if at least one of the following conditions is satisfied:
- reception of a deactivation command for the additional policy,
- deactivation and/or reactivation of the protection system (100),
and/or
- interruption of at least one communication connection of the protection system to the first and/or second network.

6. Protection system (100) according to one of the preceding claims, wherein the protection system (100) is configured to derive the control command from a received warning message from an intrusion detection apparatus (IDS), wherein the intrusion detection apparatus is set up in the first network or in the second network and/or outside the first or second network.

7. Protection system according to one of the preceding claims, wherein the protection system is configured to output the control command if there is no positive message from an intrusion detection apparatus (IDS) after a predefined period.

8. Computer-implemented method for filtering data traffic between a first network (NW1) and a second network (NW2) according to a policy by means of a protection system (100) arranged between the first network and the second network, comprising the method steps of:
- activating (11) an additional policy (P2) for the protection system (100) for filtering the data traffic on the basis of a control command,
- preventing (12) resetting to an originally activated policy (P1) of the protection system and modification of the additional policy by means of a disable command and/or upon activation of the additional policy,
- filtering (13) the data traffic between the first network and the second network, when the additional policy (P2) is activated, according to the originally activated policy (P1) and the additional policy (P2) or only according to the additional policy (P2),
and
- admitting (14) the accordingly filtered data traffic.

9. Computer program product comprising program code parts which, when the program is executed by a processor, cause the latter to carry out the steps of the method according to Claim 8.

## Revendications

1. Système (100) de sécurisation pour le filtrage d'un trafic de données entre un premier réseau (NW1) et un deuxième réseau (NW2) suivant un mécanisme de réglage, dans lequel le système (100) de sécurisation est monté entre le premier et le deuxième réseau, comportant :
a) un module (101) de gestion, qui est conçu pour activer, en fonction d'une instruction de commande, un mécanisme (P2) supplémentaire de réglage du système de sécurisation pour le filtrage du trafic de données
et
- pour, par une instruction de blocage et/ou lors de l'activation du mécanisme supplémentaire de réglage, arrêter un retour à un mécanisme (P1) de réglage activé à l'origine du système de sécurisation et une modification du mécanisme supplémentaire de réglage,
b) un module (102) de filtrage, qui est conçu pour, lorsque le mécanisme (P2) supplémentaire de réglage est activé, filtrer le trafic de données entre le premier réseau (NW1) et le deuxième réseau (NW2) suivant le mécanisme (P1) de réglage activé à l'origine et le mécanisme (P2) supplémentaire de réglage ou simplement suivant le mécanisme (P2) supplémentaire de réglage et autoriser le trafic de données filtré d'une manière correspondante.

2. Système (100) de sécurisation suivant la revendication 1, dans lequel le mécanisme (P2) supplémentaire de réglage est conçu pour filtrer le trafic de données sur la base de critères de filtrage, qui se distinguent, au moins en partie, des critères de filtrage du mécanisme de réglage activé à l'origine.

3. Système (100) suivant l'une des revendications précédentes, dans lequel le mécanisme (P2) supplémentaire de réglage est conçu pour filtrer de manière restrictive le trafic de données filtré par le mécanisme de réglage activé à l'origine.

4. Système (100) suivant l'une des revendications précédentes, dans lequel le mécanisme (P2) supplémentaire de réglage est conçu pour autoriser unidirectionnellement le trafic de données.

5. Système (100) suivant l'une des revendications précédentes, dans lequel le module (101) de gestion est conçu pour désactiver le mécanisme (P2) supplémentaire de réglage et pour remettre le système (100) de sécurisation sur le mécanisme (P1) de réglage activé à l'origine si au moins l'une des conditions suivantes est satisfaite :
- réception d'une instruction de désactivation du mécanisme supplémentaire de réglage,
- désactivation et/ou réactivation du système (100) de sécurisation,
et/ou
- interruption d'au moins une liaison de communication du système de sécurisation vers le premier et/ou le deuxième réseau.

6. Système (100) suivant l'une des revendications précédentes, dans lequel le système (100) de sécurisation est conçu pour écarter l'instruction de commande par un message d'alerte reçu d'un dispositif (IDS) de reconnaissance d'attaque, dans lequel le dispositif de reconnaissance d'attaque est établi dans le premier réseau ou dans le deuxième réseau et/ou à l'extérieur du premier ou du deuxième réseau.

7. Système suivant l'une des revendications précédentes, dans lequel le système de sécurisation est conçu pour émettre l'instruction de commande si, après une durée donnée à l'avance, un message positif d'un dispositif (IDS) de reconnaissance d'attaque est absent.

8. Procédé assisté par ordinateur de filtrage d'un trafic de données entre un premier réseau (NW1) et un deuxième réseau (NW2) suivant un mécanisme de réglage par un système (100) de sécurisation monté entre le premier réseau et le deuxième réseau, comprenant les stades de procédé :
- activation (11) d'un mécanisme (P2) supplémentaire de réglage du système (100) de sécurisation pour le filtrage du trafic de données en fonction d'une instruction de commande,
- arrêt (12) d'un retour au mécanisme (P1) de réglage activé à l'origine du système de sécurisation et d'une modification du mécanisme supplémentaire de réglage par une instruction de blocage et/ou à l'activation du mécanisme supplémentaire de réglage,
- filtrage (13) du trafic de données entre le premier réseau et le deuxième réseau, lorsque le mécanisme (P2) supplémentaire de réglage est activé suivant le mécanisme (P1) de réglage activé à l'origine et le mécanisme (P2) supplémentaire de réglage ou seulement suivant le mécanisme (P2) supplémentaire de réglage,
et
- autorisation (14) du trafic de données filtré correspondant.

9. Produit de programme d'ordinateur comprenant des parties de code de programme qui, à l'exécution du programme par un processeur, font que celles-ci effectuent les stades du procédé suivant la revendication 8.
